# EUROPÄISCHE PATENTSCHRIFT

(11) **EP 2 194 432 B1**
(45) Veröffentlichungstag und Bekanntmachung des Hinweises auf die Patenterteilung: **09.11.2011**
(21) Anmeldenummer: 10001271.5
(22) Anmeldetag: 11.09.2006
(51) Int. Cl.: G05B 19/05, G05B 17/02

(54) **Scheduling-Verfahren**
Scheduling Method
Méthode d'ordonnancement des processus

(43) Veröffentlichungstag der Anmeldung: 09.06.2010
(62) Teilanmeldung aus: 06018945.3
(73) Patentinhaber: dSPACE digital signal processing and control engineering GmbH, 33102 Paderborn (DE)
(72) Erfinder: Leinfellner, Robert, 33098 Paderborn (DE); Wölfer, Thomas, 33098 Paderborn (DE); Grosse Börger, Ralf, 33102 Paderborn (DE); Bruski, Nicola, Dr., 33102 Paderborn (DE); Miller, Eduard, 33154 Salzkotten (DE); Krisp, Holger, 30890 Barsinghausen (DE); Richert, Jobst, Dr., 59558 Lippstadt (DE)
(74) Vertreter: Gesthuysen, Michael

(56) Entgegenhaltungen:
- Gambier: "Real-time Control Systems: A Tutorial" Asian Control Conference 2004, XP002577212 Gefunden im Internet: URL:http://ascc2004.ee.mu.oz.au/proceeding s/papers/P150.pdf> [gefunden am 2010-04-12]
- ABURIDA ET AL: "Real-time PC-based simulator of electric systems and drives" IEEE APEC 2002, [Online] 2002, XP002420325 Gefunden im Internet: URL:http://ieeexplore.ieee.org/iel5/7757/2 1321/00989281.pdf> [gefunden am 2007-02-14]
- JEAN BÉLANGER: "Real-Time Simulation Technologies for the Simulation of Electric Drives and Large Systems" SAE 2004, [Online] 2004, XP002420326 Gefunden im Internet: URL:http://www.rt-lab.com/files/eds_sae200 4.pdf> [gefunden am 2007-02-14]
- DSPACE: "AutomationDesk" , [Online] Februar 2006 (2006-02), XP002420327 Gefunden im Internet: URL:http://www.dspace.de/shared/data/pdf/f lyer2006/dspace_flyer2006_automationdesk_e n.pdf> [gefunden am 2007-02-14]

## Beschreibung

Die Erfindung betrifft ein Verfahren zum Test wenigstens eines elektronischen Steuerungssystems, wobei das Steuerungssystem über einen Datenkanal mit einer Testvorrichtung in Verbindung steht, auf der Testvorrichtung wenigstens ein Umgebungsmodell berechnet wird und das Umgebungsmodell durch Ausgabe von Umgebungsmodelldaten über die Testvorrichtung an das Steuerungssystem und durch Aufnahme von Steuerungssystemdaten aus dem Steuerungssystem über den Datenkanal mit dem Steuerungssystem wechselwirkt. Darüber hinaus betrifft die Erfindung ein Scheduling-Verfahren zur Ausführung wenigstens eines Testmodells auf einem Simulationsrechner, wobei aufgrund eines externen Aktivierungssignals ein erster Scheduler aktiviert wird. Schließlich betrifft die Erfindung ferner eine Testvorrichtung zum Test wenigstens eines elektronischen Steuerungssystems, wobei die Testvorrichtung über einen Datenkanal mit dem Steuerungssystem in Verbindung bringbar ist, mit der Testvorrichtung wenigstens ein Umgebungsmodell berechnet wird und das Umgebungsmodell durch Ausgabe von Umgebungsmodelldaten an das Steuerungssystem und durch Aufnahme von Steuerungssystemdaten aus dem Steuerungssystem über den Datenkanal mit dem Steuerungssystem wechselwirken kann.

Verfahren und Vorrichtungen zum Test von elektronischen Steuerungssystemen sind aus der Praxis in verschiedener Form bekannt und werden vor allem in der angewandten Forschung und der industriellen Entwicklung in dem weiten Feld der Entwicklung und dem Einsatz elektronischer Steuerungssysteme verwendet, nämlich überall dort, wo im weitesten Sinne Prozeßsteuerungsaufgaben gelöst werden müssen. Der Begriff "Steuerungssystem" wird im folgenden als umfassende Bezeichnung für eine technische Einrichtung verwendet, die im wesentlichen für die Aufgaben Messen, Steuern, Regeln, Kalibrieren eingesetzt wird. Im weitesten Sinne handelt es sich dabei generell um ein elektronisches, programmsteuerbares System, das im Bereich automotiver Anwendungen üblicherweise Steuergerät genannt wird. Der Begriff "Steuerungssystem" ist nicht auf das beschränkt, was im systemtheoretischen Sinne einengend als Steuerung definiert wird, üblicherweise werden Regelungen auf Steuerungssystemen implementiert.

Gambier: "Real-time Control Systems: A tutorial", Asian Conference 2004 offenbart alle Merkmale des Oberbegriffs des Anspruchs 1.

Die Entwicklung eines letztlich in der Serienfertigung einsetzbaren Steuerungssystems vollzieht sich meist in den folgenden Schritten:
In der Funktionsentwicklung wird mit Hilfe von mathematischen Modellierungswerkzeugen zunächst ein von der späteren Zielhardware und -umgebung abstrakter Reglerentwurf vorgenommen, wobei der so entwickelte Regler lediglich in einer Simulation mit dem ebenfalls nur als mathematisches Modell existierenden Prozeßabbild erprobt wird.

In einem nächsten Schritt, bei dem sogenannten Rapid Control Prototyping (RCP), wird der abstrakte Reglerentwurf mit Hilfe von Code-Generatoren in ein ausführbares Programm übersetzt, das auf einem üblicherweise sehr leistungsstarken - und mit dem letztlich zum Einsatz kommenden Serien-Steuerungssystem nicht vergleichbaren - echtzeitfähigen Steuerungssystem betrieben wird. Dieses RCP-Steuerungssystem interagiert dann über entsprechende I/D-Schnittstellen mit dem realen zu beeinflussenden Prozeß. Sind diese Ergebnisse zufriedenstellend, wird wiederum über entsprechend ausgestattete Code-Generatoren aus dem mathematischen Modell des Reglers ausführbarer Code für das Serien-Steuerungssystem generiert, so daß das in der Serienanwendung tatsächlich zum Einsatz kommende Steuerungssystem mit der Funktionalität ausgestattet werden kann, mit der es auch in der Serienanwendung ausgestattet sein muß.

Bevor das Serien-Steuerungssystem jedoch in Zusammenhang mit dem realen Prozeß erprobt wird, wird es eingehenden Tests unterzogen, sogenannten Hardware-in-the-Loop-Tests (HIL-Tests). Bei HIL-Tests wird das (Serien-) Steuerungssystem mit einer Testvorrichtung verbunden, wobei auf der Testvorrichtung mit Hilfe eines Umgebungsmodells die funktionale Umgebung des zu testenden Steuerungssystems simuliert wird; das Steuerungssystem wechselwirkt also mit einer virtuellen Umgebung, indem das Umgebungsmodell durch Ausgabe von Umgebungsmodelldaten über die Testvorrichtung an das Steuerungssystem und durch Aufnahme von Steuerungssystemdaten aus dem Steuerungssystem über einen Datenkanal mit der Testvorrichtung in Verbindung steht.

Die vorliegende Erfindung wird am Beispiel eines solchen HIL-Tests erläutert, sie ist jedoch begrifflich nicht auf eine solche Testsituation beschränkt, vielmehr ist sie auf den Test eines beliebigen Steuerungssystems anwendbar, das mit einer Testvorrichtung in Verbindung steht und mittels eines Umgebungsmodells überprüft wird, das auf der Testvorrichtung betrieben wird.

Bei dem Steuerungssystem kann es sich beispielsweise im Bereich automotiver Anwendungen um ein Motor-Steuergerät handeln, wobei das Umgebungsmodell dieses Motor-Steuergeräts dann ein Motor-Modell ist, das in Echtzeit auf der Testvorrichtung betrieben wird. Genauso könnte es sich aber auch um ein fahr und motordynamisches Modell eines ganzen Fahrzeugs handeln, das in einer virtuellen Umgebung bewegt wird. Das Umgebungsmodell muß grundsätzlich nicht alle Schnittstellen des zu testenden Steuerungssystems abdecken, vielmehr können auch beliebige Teile der Umgebung durch reale Komponenten implementiert sein. Im vorangehenden Beispiel könnte dies bedeuten, daß das zu testende Steuerungssystem tatsächlich mit einem realen Verbrennungsmotor verbunden ist, wobei die Umgebung des Motors (z. B. Getriebe, Antriebsstrang, Fahrgestell und Straße) mit Hilfe eines auf der Testvorrichtung betriebenen Umgebungsmodells nachgebildet ist. Das Umgebungsmodell muß also kein vollständiges Umgebungsmodell sein, es kann direkt und/oder indirekt mit dem zu testenden Steuerungssystem in Verbindung stehen.

Der eigentliche Test des Steuerungssystems besteht darin, daß das Umgebungsmodell des Steuerungssystems in gezielter Weise beeinflußt wird, nämlich durch ein Testmodell zur Beeinflussung des Umgebungsmodells. Eine solche gezielte Beeinflussung kann beispielsweise beim Test eines Steuerungssystems für Bremssysteme darin liegen, daß die den Untergrund beschreibenden Parameter in weiten Grenzen variiert werden und das Brems-Steuerungssystem jeweils zur Vollbremsung veranlaßt wird. Dabei wird zur Beurteilung des Steuerungssystems meist das Verhalten des Umgebungsmodells herangezogen, das im vorangehenden Beispiel in der Ermittlung der Verzögerung des Gesamtsystems-also des Fahrzeugs-liegen könnte. Genauso gut ist es möglich, auch direkt Zustandsvariablen aus dem Steuerungssystem auszulesen und zur Beurteilung des Steuerungssystems heranzuziehen. Aus dem Stand der Technik sind verschiedene Verfahren und Vorrichtungen bekannt, die den Test von Steuerungssystemen im vorgenannten Sinne ermöglichen. Es ist beispielsweise bekannt, zur Beeinflussung der Testvorrichtung, auf der das Umgebungsmodell betrieben wird, neben der Testvotrichtung eine weitere Experimentiervorrichtung vorzusehen, die mit der Testvorrichtung in Verbindung steht. Auf der Experimentiervorrichtung - in der Regel ein Standard-PC - wird ein Testmodell ausgeführt, das über die Datenverbindung zwischen Experimentiervorrichtung und Testvorrichtung das Umgebungsmodell auf der Testvorrichtung in der gewünschten Weise beeinflußt. Dabei gestattet die Experimentiervorrichtung, das Testnnodell mit einer grafischen Modellierungsumgebung zu entwerfen, wobei in Abhängigkeit von der Zeit und in Abhängigkeit von Modellgrößen des Umgebungsmodells eine bestimmte Testfunktionalität vorgegeben werden kann (dSPACE GmbH: "Automation-Desk: Test and Experiment Software"; Produktbeschreibung, Februar 2006). Der Nachteil bei dieser Vorgehensweise besteht darin, daß eine strenge Synchronisation zwischen dem Umgebungsmodell auf der Testvorrichtung und dem Testmodell auf der Experimentiervonichtung nicht gewährleistet werden kann, da die Kopplung zwischen den beiden Vorrichtungen mit den die Kommunikation betreffenden Totzeiten verbunden ist. Darüber hinaus kann bei Verwendung eines nicht echtzeitfähigen Standard-Betriebssystems auf der Experimentiervorrichtung unter Umständen eine strenge Echtzeitfähigkeit nicht gewährleistet werden. Dies bedeutet, daß eine in einem bestimmten Berechnungsintervall des Umgebungsmodells geplante Beeinflussung des Umgebungsmodells nicht immer auch in diesem Berechnungsintervall stattfinden kann, was möglicherweise zur Fehlausführung und Fehlinterpretation des Tests führen kann.

Echtzeitfähigkeit im Sinne der vorliegenden Erfindung bedeutet, daß Vorgänge, deren Ausführung bis zu einem bestimmten Zeitpunkt vorgesehen und vorgegeben ist, auch strikt bis zu diesem Zeitpunkt ausgeführt und erledigt sein müssen. Die Frage der Echtzeitfähigkeit ist also nicht gebunden an ein absolutes Geschwindigkeitsmaß für eine Berechnung, sondern sie ist lediglich an die Erfüllung der Bedingung gebunden, daß die innerhalb eines Zeitintervalls geplanten Aktionen auch innerhalb dieses Zeitintervalls ausgeführt werden können; Echtzeitfähigkeit ist folglich nicht zwingend die möglichst schnelle Ausführung verlangte Aktionen, sondern die sichere Ausführung dieser Aktionen innerhalb der dafür vorgesehenen Zeit.

Bei zeitdiskreten Systemen, die mit einer bestimmten - meist festen - Berechnungs- und Abtastfrequenz betrieben werden, entspricht die kürzeste Zeiteinheit der Länge des - fixen - Abtastintervalls des Steuerungssystems. Wenn das Steuerungssystem beispielsweise mit einer Millisekunde abgetastet und berechnet wird, wird das Umgebungsmodell üblicherweise zumindest auch mit dieser Abtastrate betrieben. Das bedeutet, daß die Modellgrößen des Umgebungsmodells - im systemtheoretischen Sinne also die Zustandsgrößen des Umgebungsmodells - mit einer Frequenz von 1 kHz berechnet werden und darauf fuBend, ebenfalls mit einer Frequenz von 1 kHz, die Ausgangsgrößen des Umgebungsmodells berechnet und zur Beeinflussung des Steuerungssystems ausgegeben werden.

Alle Aktionen, die innerhalb eines Abtast- bzw. Berechnungsintervalls - im vorliegenden Beispiel also innerhalb einer Millisekunde - ausgeführt werden, finden für das zeitdiskrete Abtastsystem gleichzeitig statt; diese Aktionen sind voneinander zeitlich nicht unterscheidbar. Ausgehend von dieser Definition von Echtzeitfähigkeit und Gleichzeitigkeit, ist es also möglich, selbst wenn ein elektronisches Steuerungssystem bzw. eine Testvorrichtung verwendet wird, die Anweisungen nur strikt sequentiell verarbeiten kann, mehrere Aktionen gleichzeitig durchzuführen, sofern sie in dem gleichen Abtast- bzw. Berechnungsintervall ausgeführt werden.

Der Vorteil des zuvor beschriebenen Testverfahrens besteht darin, daß zur Durchführung des Tests das Umgebungsmodells weder angehalten noch verändert zu werden braucht, wobei Echtzeitbedingungen allerdings bei kleinen Abtastraten nicht sicher eingehalten werden können, da die üblichen Experimentiervorrichtungen auf Basis eines nicht echtzeitfähigen Betriebssystems keine zeitlich vorhersagbaren Ausführungen garantieren können.

Bei einem anderen aus dem Stand der Technik bekannten Verfahren zum Test eines elektronischen Steuerungssystems wird das Umgebungsmodell durch Aufrufe von Testfunktionen instrumentiert, Das Umgebungsmodell ist folglich nicht mehr unabhängig von dem durchzuführenden Test und muß immer dann angepaßt werden, wenn der Test verändert wird. Nachteilig an diesem Verfahren ist, daß das Testmodell und das Umgebungsmodell funktional ausgesprochen abhängig voneinander sind, da das Umgebungsmodell mit speziellen, das Testmodell betreffenden Funktionsaufrufen instrumentiert werden muß (OPAL-RT TECHNOLOGIES INC.: "RT-LAB, Product Description, Feature Details, Typical Applications"; 2005). Dies schafft einen erheblichen Overhead innerhalb des Umgebungsmodells und führt daher - selbst wenn die Funktionalität des Testmodells eine "Null-Funktionalität" ist - unter Umständen zu erheblichen Laufzeit-Nachteilen. Ein weiteres Kennzeichen der funktionalen Abhängigkeit besteht darin, daß das Umgebungsmodell auch dann verändert werden muß, wenn sich eigentlich nur etwas an der Testfunktionalität ändert, weshalb insbesondere eine Veränderung der Testfunktionalität zur Laufzeit des Umgebungsmodells praktisch nicht bzw. nur in sehr engen Grenzen möglich ist.

Der Erfindung liegt daher die Aufgabe zugrunde, ein Verfahren und eine Vorrichtung zum Test eines elektronischen Steuerungssystems anzubieten, bei denen die oben genannten Nachteile - zumindest teilweise - vermieden werden.

Die zuvor aufgezeigte Aufgabe ist erfindungsgemäß nach einer ersten Lehre der Erfindung bei einem Verfahren zum Test wenigstens eines elektronischen Steuerungssystems mit einer Testvorrichtung und einem auf der Testvorrichtung berechneten Umgebungsmodell, wobei das Steuerungssystem über einen Datenkanal mit der Testvorrichtung in Verbindung steht und das Umgebungsmodell durch Ausgabe von Umgebungsmodelldaten über die Testvorrichtung an das Steuerungssystem und durch Aufnahme von Steuerungssystemdaten aus dem Steuerungssystem über den Datenkanal mit dem Steuerungssystem wechselwirkt, dadurch gelöst, daß auf der Testvorrichtung wenigstens ein Testmodell zur Beeinflussung des Umgebungsmodells und/oder der Berechnung des Umgebungsmodells und/oder des elektronischen Steuerungssystems ausgeführt wird, wobei das Testmodell bzw. die Testmodelle funktional unabhängig vom Umgebungsmodell und - im Testbetrieb - synchron mit dem Umgebungsmodell ausgeführt wird bzw. werden.

Das erfindungsgemäße Verfahren ist gegenüber dem aus dem Stand der Technik bekannten Verfahren in vielerlei Hinsicht vorteilhaft. Dadurch, daß das Testmodell funktional unabhängig vom Umgebungsmodell ausgeführt wird, muß das Umgebungsmodell nicht mehr mit gezielt plazierten Funktionsaufrufen mit bezug auf das Testmodell instrumentiert werden, Dies hat einerseits den Vorteil, daß das Umgebungsmodell universell einsetzbar ist, unabhängig von dem durchzuführenden Test, und andererseits bringt dieses Vorgehen den Vorteil mit sich, daß nicht genutzte Funktionsaufrufe in das Testmodell, die Laufzeit des Uzngebungsmodells nicht mehr belasten. Ferner werden bei dem erfindungsgemäßen Verfahren Totzeiten und Asynchronitäten zwischen der Ausführung von Umgebungsmodell und Testmodell gegenüber solchen Verfahren vermieden, bei denen das Umgebungsmodell der Testvorrichtung von einer davon hardwaremäßig getrennten Konfigurationsvorrichtung beziehungsweise von einem auf der Konfigurationsvorrichtung betriebenen Testmodell beeinflußt wird.

In einer ersten vorteilhaften Ausgestaltung der Erfindung beeinflußt das Testmodell das Umgebungsmodell, indem es unter Kenntnis der Speicherorte der Modellgrößen des Umgebungsmodells diese Speicherorte beschreibt und/oder ausliest. Durch den direkten Zugriff des Testmodells auf die Modellgrößen des Umgebungsmodells kann auf einer Software-Schnittstelle zwischen den beiden Modellen verzichtet werden, was erhebliche Laufzeitvorteile mit sich bringt. Selbstverständlich muß die Kenntnis der Speicherorte keine unmittelbare Kenntnis sein, es kann sich auch um eine mittelbare Kenntnis der Speicherorte handeln. Bei einer mittelbaren Kenntnis der Speicherorte nutzt das Testmodell beispielsweise nur Referenzen auf Modellgrößen des Umgebungsmodells, die ihrerseits auf die tatsächlichen Speicherorte der Modellgrößen des Umgebungsmodells verweisen. Die Auflösung der Referenzen kann z. B. durch das zugrunde liegende Betriebssystem erfolgen.

Nach einer bevorzugten Ausgestaltung des erfindungsgemäßen Verfahrens wird eine Konfigurationsvomchtung mit der Testvorrichtung über einen weiteren Datenkanal in Verbindung gebracht und das Testmodell und/oder das Umgebungsmodell nachfolgend über den weiteren Datenkanal von der Konfigurationsvorrichtung auf die Testvorrichtung übertragen. Durch diese Ausgestaltung des Verfahrens ist es beispielsweise auch in besonders vorteilhafter Weise möglich, über die Konfigurationsvorrichtung, die beispielsweise aus einem handelsüblichen PC mit entsprechender Modellierungssoftware besteht, das Testmodell und/oder das Umgebungsmodell zu erstellen, abzuändern oder lediglich zu erfassen, um es dann gezielt auf die Testvorrichtung zu übertragen. Die Konfigurationsvorrichtung wird in dieser Ausgestaltung der Erfindung als Nutzerschnittstelle eingesetzt, über die der Nutzer Zugang zu der Zielhardware - also zu der Testvorrichtung - hat.

Das erfindungsgemäße Verfahren zeichnet sich in einer weiteren Ausgestaltung dadurch aus, daß zur Laufzeit des Umgebungsmodells die gleichzeitige Ausführung wenigstens eines der ausgeführten Testmodelle gestoppt wird, wodurch ein aus mehreren Testmodellen bestehender Gesamttest in weiten Bereichen variiert werden kann. Ferner ist in dem erfindungsgemäßen Verfahren vorgesehen, daß wenigstens ein Testmodell - ersatzweise oder zusätzlich - auch während des Testbetriebs auf die Testvorrichtung geladen und dort zur Ausführung gebracht wird. Genauso gut kann selbstverständlich ein bereits auf der Testvorrichtung befindliches Testmodell zu einem beliebigen Zeitpunkt auf der Testvorrichtung zur Ausführung gebracht werden; dies ist unabhängig davon, ob das Tesbnnodell unmittelbar zuvor auf die Testvorrichtung geladen worden ist oder ob das zu startende Testmodell bereits seit längerem auf der Testvorrichtung vorhanden gewesen ist

Die synchrone Ausführung von Umgebungsmodell und Testmodell ist essentiell für den Test eines Steuerungssystems, weil nur dann z. B. reproduzierbare Testergebnisse gewährleistet werden können. Synchronität zwischen Umgebungs- und Testmodell bedeutet beispielsweise, daß innerhalb eines bestimmten Berechnungsintervalls des Umgebungsmodells ein bestimmter und bestimmbarer Teil des Testmodells ausgeführt wird.

Bei einer besonders bevorzugten Ausgestaltung des Verfahrens wird das Testmodell bedarfsweise in einem zum Umgebungsmodell asynchronen Betriebsmodus ausgeführt, um dann nachfolgend synchron mit dem Umgebungsmodell ausgeführt zu werden, Dies ist insbesondere dann vorteilhaft, wenn das Testinodell gestartet wird und im Rahmen des Starts beispielsweise umfangreiche Initialisierungen vorgenommen werden müssen. Solche Initialisierungsvorgänge können derart umfangreich sein, daß sie nicht innerhalb eines Abtastintervalls durchgeführt werden können, so daß dadurch ein Verstoß gegen die Echtzeitanforderungen bzw. gegen die Anforderung der Synchronität zwischen Testmodell und Umgebungsmodell provoziert würde. In einem solchen Fall sieht das erfindungsgemäße Verfahren vor, vorübergehend die Echtzeit- und Synchronitätsanforderungen zurückzustellen, bis der Berechnungsüberhang soweit abgebaut ist, daß das Testmodell mit dem Umgebungsmodell synchron und damit unter Wahrung der Echtzeitanforderungen wieder ausgeführt werden kann. Eine solche Situation wird vor allem dann auftreten, wenn ein Testmodell neu auf die Testvorrichtung geladen worden ist und in einen bereits laufenden Test des elektronischen Steuerungssystems integriert werden soll.

In einem weiteren bevorzugten Ausführungsbeispiel ist das erfindungsgemäße Verfahren derart ausgestaltet, daß das Testmodell in ein Ausfühnmgsformat umgewandelt wird, das auf der Testvorrichtung durch einen Interpreter ausgeführt wird. In einer besonders bevorzugten Ausgestaltung besteht dieses Ausführungsformat in Byte-Code, der auf der Testvorrichtung von einem Echtzeit-Interpreter ausgeführt wird. Die Ausführung des - maschinenunabhängigeu - Byte-Codes durch den Interpreter ist grundsätzlich mit einem Zeitnachteil verbunden, da der Interpreter, der häufig auch als virtuelle Maschine bezeichnet wird, den Byte-Code nicht direkt ausführen kann, sondern ihn vorgelagert zu übersetzen hat. Aus diesem Grund wird der Echtzeit-Interpreter bevorzugt im Zusammenhang mit einem Just-in-Time-Compiler verwendet, der zu Beginn der Laufzeit des Testmodelle den Byte-Code einmalig in einen maschinenabhängigen Maschinen-Code übersetzt. Insbesondere in diesem Fall ist es sinnvoll, das Testmodell während der Übersetzungsphase in einem asynchronen Modus zum Umgebungsmodell zu betreiben, wie dies am Beispiel der Initialisierung eines Testmodells bereits beschrieben worden ist.

In einer weiteren vorteilhaften Ausgestaltung der Erfindung wird zur Synchronisierung des Testmodells mit dem Umgebungsmodell von dem Umgebungsmodell ein Aktivierungssignal zur Aktivierung des Testmodells generiert. Die Generierung des Aktivierungssignals durch das Umgebungsmodell steht im Einklang mit der Forderung nach funktionaler Unabhängigkeit zwischen dem Umgebungsmodell und dem Testmodell, da aus dem Umgebungsmodell keine das Testmodell unmittelbar betreffenden Funktionsaufrufe erfolgen, wie dies aus dem Stand der Technik bekannt ist. Das Aktivierungssignal dient lediglich als Taktgeber für die Ausführung des Testmodells, das jedoch vollkommen unabhängig vom Umgebungsmodell ausgeführt werden kann.

Es ist insbesondere vorgesehen, das Aktivierungssignal in jedem oder jedem ganzzahligen vielfachen Berechnungsintervall des Umgebungsmodells zu generieren, so daß das Testmodell auch als zeitdiskretes Abtastsystem berechnet werden kann. Das Aktivierungssignal wird von dem Umgebungsmodell in einer bevorzugten Ausgestaltung dann generiert, wenn sichergestellt ist, daß charakteristische Phasen der Modellberechnung bzw. -handhabung abgeschlossen sind. Zu solchen Phasen zählt beispielsweise die Erfassung aller Eingangsgrößen des Umgebungsmodells, die Berechnung der Zustandsgrößen des Umgebungsmodells aus den aktuellen Eingangsgrößen und aus vergangenen Zustandsgrößen des Umgebungsmodells oder auch die Ausgabe von Ausgangsgrößen aus dem Umgebungsmodell. Durch diese Handhabung des erfindungsgemäßen Verfahrens ist gewährleistet, daß sich das Umgebungsmodell in einem zeitlich konsistenten Zustand befindet und das Testmodell in Folge dessen auf einen konsistenten Satz von Modellgrößen des Umgebungsmodells zugreifen kann.

Nach einer weiteren vorteilhaften Ausgestaltung des erfindungsgemäßen Verfahrens wird durch das Aktivierungssignal ein Scheduling-Verfahren aktiviert, das die Ausführung des Testmodells koordiniert. Auch aus dieser Eigenschaft ist ersichtlich, daß durch das Aktivierungssignal eine funktionale Entkopplung zwischen Umgebungsmodell und Testmodell gewährleistet ist, da das Testmodell nachfolgend unabhängig vom Umgebungsmodell von einer übergeordneten Koordinierungseinheit - dem besagten Scheduling-Verfahren - koordiniert wird.

Eine zweite Lehre der Erfindung ist auf die Ausgestaltung des Scheduling-Verfahrens gerichtet, bei dem aufgrund eines externen Aktivierungssignals ein erster Scheduler aktiviert wird. Das Scheduling-Verfahren löst die oben aufgezeigte Aufgabe erfindungsgemäß dadurch, daß der erste Scheduler das Testmodell zur Ausftihrung bringt bzw. den Teil des Testmodells zur Ausführung bringt, der einem vorgegebenen Berechnungsintervall entspricht, und der erste Scheduler nach abgeschlossener Ausführung des Testmodells bzw. des vorgegebenen Teils des Testmodells die Beendigung der Berechnung durch ein Beendigungssignal anzeigt.

Damit der erste Scheduler in Aktion tritt, bedarf es eines Aktivierungssignals, das beispielsweise von einem Interrupt gebildet wird. Der auf diese Weise aktivierte erste Scheduler kann die Ausführung des Testmodells bzw. eines vorgegebenen Teils des Testmodells von weiteren Parametern abhängig machen. So können dem ersten Scheduler durch Übergabeparameter bei Aufruf Werte übergeben werden oder der Scheduler kann bei Aktivierung aus dazu vorgesehenen Speicherzellen entsprechende Parameter auslesen, die den ersten Scheduler darüber informieren, welche Testmodelle bzw. Teile von Testmodellen zu berechnen sind und für welches Berechnungsintervall diese Testrnodelle bzw. Teile von Testmodellen ausgeführt werden sollen. Dadurch, daß der erste Scheduler nach abgeschlossener Ausführung des Testmodells bzw. des vorgegebenen Teils des Testmodells die Beendigung der Berechnung durch ein Beendigungssignal anzeigt, ist es über- bzw. nebengeordneten Systemen, wie z. B. dem Umgebungsmodell, möglich, zeitnah zu reagieren, um beispielsweise ihren Verlauf fortzusetzen.

Nach einer bevorzugten Ausgestaltung des erfindungsgemäßen Scheduling-Verfahrens ruft der erste Scheduler in dem Fall, daß das Testmodell mehrere gleichzeitig zu verarbeitende Teststränge aufweist, einen zweiten Scheduler unter Angabe der gleichzeitig zu verarbeitenden Teststränge auf, woraufhin der zweite Scheduler die Ausführung der gleichzeitig zu bearbeitenden Teststränge nacheinander veranlaßt und nach Beendigung aller gleichzeitig zu bearbeitenden Teststränge die Beendigung der Ausführung dem ersten Scheduler anzeigt, woraufhin der erste Scheduler die Beendigung der Berechnung durch ein Beendigungssignal anzeigt. Im einfachsten Fall arbeitet der zweite Scheduler stapelbasiert. Das bedeutet, daß die verschiedenen Teststränge als einzelne Stapel von Testfunktionen organisiert und in der dadurch vorgegebenen Reihenfolge bearbeitet werden, wobei ein Stapel nach dem anderen bearbeitet wird, sofern mehrer vorhanden sind.

Der Begriff der Gleichzeitigkeit ist hier genau so aufzufassen, wie er zuvor im Zusammenhang mit Echtzeit-Simulationen erläutert worden ist. Als gleichzeitig gelten auch im Sinne der zweiten Lehre all jene Vorgänge, die innerhalb der - vorgegebenen - kleinsten zeitlichen Auflösung der Testvorrichtung bearbeitet werden; folglich können auch in der physikalischen Zeit tatsächlich hintereinander vorgenommene Berechnungen im Sinne der angegebenen Definition als gleichzeitig aufgefaßt werden. Insofern ist es kein Widerspruch, daß der zweite, für die Bearbeitung der gleichzeitig zu verarbeitenden Teststränge eines Testmodells verantwortliche Scheduler die Ausführung der gleichzeitig zu bearbeitenden Teststränge nacheinander veranlaßt. Bei den gleichzeitig zu verarbeitenden Teststrängen innerhalb des Testmodells kann es sich beispielsweise einfach um die Generierung zweier verschiedener Testsignale handeln, mit denen ein Steuerungssystem beaufschlagt werden soll.

Das erfindungsgemäße Scheduling-Verfahren erfährt eine besonders vorteilhafte Ausgestaltung dadurch, daß der erste Scheduler in dem Fall, daß mehrere Testmodelle bzw. Teile mehrerer Testmodelle gleichzeitig zu berechnen sind, den einen jedem Testmodell zugeordneten zweiten Scheduler aufruft, derart, daß immer nur ein zweiter Scheduler aktiv ist, der jeweils aktive zweite Scheduler dem ersten Scheduler die Beendigung der Ausführung des ihm zugeordneten Testmodells anzeigt, woraufhin der erste Scheduler einen weiteren - bislang unaktivierten - zweiten Scheduler aktiviert, bis alle Testmodelle bzw. Teile von Testmodellen berechnet worden sind, woraufhin der erste Scheduler die Beendigung der Berechnung durch ein Beendigungssignal anzeigt. Das beschriebene erfindungsgemäße Verfahren ist besonders übersichtlich und sehr einfach zu implementieren und gestattet es auf besonders einfache Weise, die vollständige Bearbeitung mehrerer Testmodelle zu überprüfen. Die verschiedenen Ausgestaltungen des erfindungsgemäßen Scheduling-Verfahrens bezüglich der Behandlung mehrerer gleichzeitig zu verarbeitender Teststränge innerhalb eines Testmodells und hinsichtlich der gleichzeitigen Bearbeitung mehrerer Testnaodelle sind selbstverständlich ohne weiteres miteinander kombinierbar.

Nach einer letzten Lehre der Erfindung ist die zuvor aufgezeigte Aufgabe erfmdungsgemäß bei einer Testvorrichtung zum Test wenigstens eines elektronischen Steuerungssystems dadurch gelöst, daß auf der Testvorrichtung wenigstens ein Testmodell zur Beeinflussung des Umgebungsmodells und/oder der Berechnung des Umgebungsmodells und/oder des elektronischen Steuerungssystems ausgeführt wird, wobei das Testmodell funktional unabhängig vom Umgebungsmodell und - im Testbetrieb - synchron mit dem Umgebungsmodell ausführbar ist.

Die erfindungsgemäße Testvorrichtung ist in weiteren bevorzugten Ausführungsbeispielen weiterhin so ausgestaltet, daß mit ihr die Verfahrensschritte durchführbar sind, die im Rahmen dieser Erfindung hinsichtlich des Tests wenigstens eines elektronischen Steuerungssystems beschrieben worden sind.

Im einzelnen gibt es nun eine Vielzahl von Möglichkeiten, das erfindungsgemäße Verfahren zum Test eines elektronischen Steuerungssystems, das erfindungsgemäße Scheduling-Verfahren und die erfindungsgemäße Testvorrichtung auszugestalten und weiterzubilden. Dazu wird verwiesen sowohl auf die den Patentansprüchen 1, 9 und 12 nachgeordneten Patentansprüche als auch auf die Beschreibung von in der Zeichnung dargestellten Ausführungsbeispielen des erfindungsgemäßen Testverfahrens und des erfindungsgemäßen Scheduling-Verfahrens. In der Zeichnung zeigen
- Fig. 1: eine schematische Darstellung eines Ausführungsbeispiels einer Anordnung aus elektronischem Steuerungssystem, Testvorrich- tung und Konfigurationsvorrichtung,
- Fig. 2: eine schematische Darstellung eines Ausführungsbeispiels des erfindungsgemäßen Testverfahrens, des erfindungsgemäßen Scheduling-Verfahrens und der erfindungsgemäßen Testvorrich- tung,
- Fig. 3: eine schematische Darstellung eines weiteren Ausflihrungsbei- spiels des erfindungsgemäßen Testverfahrens, des erfindungsge- mäßen Scheduling-Verfahrens und der erfindungsgemäßen Test- vorrichtung,
- Fig. 4: eine schematische Darstellung eines weiteren Ausführungsbei- spiels des erfindungsgemäßen Testverfahrens, des erfindungsge- mäßen Scheduling-Verfahrens und der erfindungsgemäßen Test- vorrichtung,
- Fig. 5: eine Sinus-Kurve, die mit einem Ausführungsbeispiel des erfin- dungsgemäßen Testverfahrens, des erfindungsgemäßen Schedu- ling-Verfahrens und der erfindungsgemäßen Testvorrichtung er- zeugt worden ist, und
- Fig. 6: das erfindungsgemäße Zusammenspiel der Komponenten des er- findungsgemäßen Testverfahrens, des erfindungsgemäßen Sche- duling-Verfahrens und der erfindungsgemäßen Testvorrichtung bei der Generierung der Sinus-Kurve nach Fig. 5.

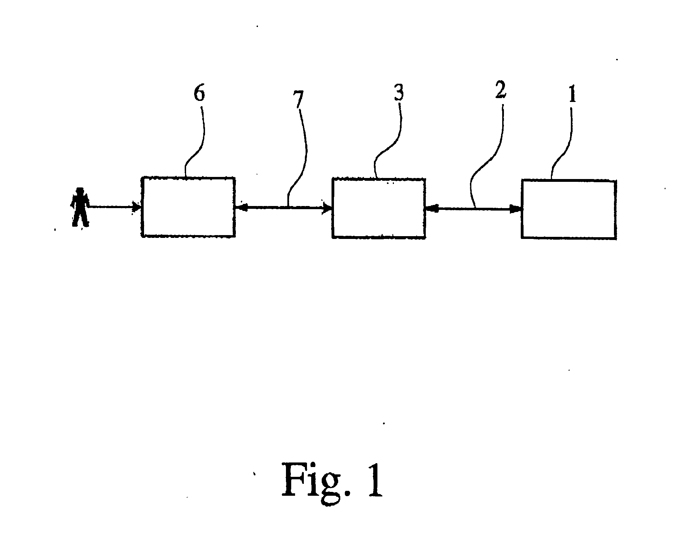

Die Fig. 1 bis 6 zeigen anhand verschiedener Ausillhrungsbeispiele jeweils bestimmte Aspekte des erfindungsgemäßen Testverfahrens, des erfindungsgemäßen Scheduling-Verfahrens und der erfindungsgemäßen Testvorrichtung.

Fig. 1 zeigt den typischen Aufbau einer Testumgebung zum Test eines elektronischen Steuerungssystems 1, das zur Durchführung des erfindungsgemäßen Verfahrens geeignet ist. Das zu testende elektronische Steuerungssystem 1 ist hier über einen Datenkanal 2 mit einer Testvorrichtung 3 verbunden. Auf der Testvorrichtung 3 wird ein Umgebungsmodell 4 berechnet, wobei das Umge-. bungsmodell 4 durch Ausgabe von Umgebungsmodelldaten über die Testvorrichtung 3 an das Steuerungssystem 1 und durch Aufnahme von Steuerungssystemdaten aus dem Steuerungssystem 1 über den Datenkanal 2 mit dem Steuerungssystem 1 wechselwirkt.

Der Test des Steuerungssystems 1 über die Testvorrichtung 3 erfolgt grundsätzlich durch Beeinflussung des Umgebungsmodells 4, das auf der Testvorrichtung 3 ausgeführt wird. Dazu wird auf der Testvorrichtung 3 einen Testmodell 5 zur Beeinflussung des Umgebungsmodells 4 und/oder der Berechnung des Umgebungsmodells 4 und/oder des elektronischen Steuerungssystems 1 ausgeführt, wobei das Testmodell 5 bzw, die Testmodelle 5, 5a, 5b funktional unabhängig vom Umgebungsmodell 4 und - im Testbetrieb - synchron mit dem Umgebungsmodell 4 ausgeführt wird bzw. werden. Das Umgebungsmodell 4 selbst bzw. die Berechnung des Umgebungsmodells 4 ist beispielsweise beeinflußbar, indem Parameter des Umgebungsmodells 4 verändert werden. Genauso gut ist es jedoch mit dem auf der Testvorrichtung 3 implementierten Verfahren möglich, über das Testmodell 5 direkt über den Datenkanal 2 das zu testende Steuerungssystems 1 zu beeinflussen, also beispielsweise mit Testsignalen zu beaufschlagen.

Vorteilhaft an dem in Fig. 1 dargestellten Ausführungsbeispiel der Testvorrichtung 3 beziehungsweise des Testverfahrens, das auf der Testvorrichtung 3 ausgeführt wird, ist, daß das Testmodell 5 funktional unabhängig von dem Umgebungsmodell 4 ausgeführt wird, so daß das Umgebungsmodell 4 auch bei Änderungen des Testmodells 5 nicht verändert oder angepaßt zu werden braucht.

In der Testvorrichtung 3 nach den Fig. 1 bis 4 wird die funktionale Unabhängigkeit des Umgebungsmodells 4 von dem Testmodell 5 erreicht, indem das Testmodell 5 unter Kenntnis der Speicherorte der Modellgrößen des Umgebungsmodells 4 diese Speicherorte beschreibt und/oder ausliest. Das Testmodell 5 kann beliebig verändert werden - auch zur Laufzeit des Umgebungsmodells 4 -, ohne daß das Umgebungsmodell 4 in irgendeiner Weise angepaßt werden müßte. Durch den derart realisierten direkten Zugriff des Testrnodells 5 auf die Modellgrößen des Umgebungsmodells 4 kann auf eine Schnittstelle verzichtet werden, mit deren Hilfe die Modellgrößen des Umgebungsmodells 4 erst zugreifbar gemacht werden müßten, weshalb das dargestellte Verfahren erhebliche Laufzeitvorteile mit sich bringt.

In Fig. 1 ist ferner dargestellt, daß die Testvorrichtung 3 mit einer Konfigurationsvorrichtung 6 über einen weiteren Datenkanal 7 in Verbindung gebracht worden ist, so daß das Testmodell 5 und das Umgebungsmodell 4 nachfolgend über den weiteren Datenkanal 7 von der Konfigurationsvorrichtung 6 auf die Testvorrichtung 3 übertragen werden konnten. Die Konfigurationsvorrichtung 6 dient in dem in Fig. 1 dargestellten Ausführungsbeispiel als Nutzerschnittstelle, die es dem Nutzer erlaubt, die Testvorrichtung 3 wunschgemäß zu beeinflussen.

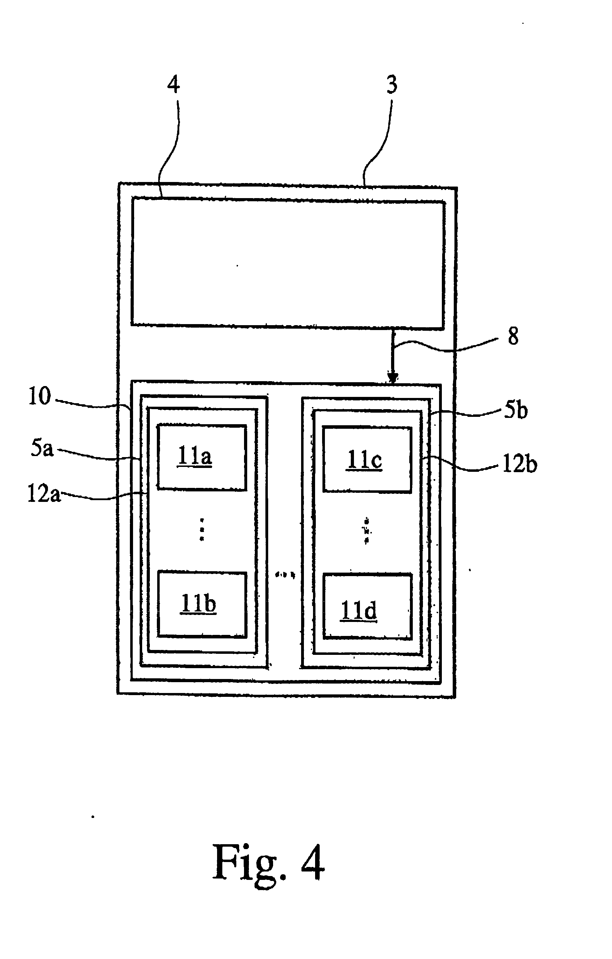

Aufgrund der funktionalen Unabhängigkeit zwischen dem Umgebungsmodell 4 und dem Testmodell 5 ist es ohne weiteres möglich, zur Laufzeit des Umgebungsmodells 4 die Ausführung des Testmodells 5 beziehungsweise eines der ausgeführten Testmodelle 5a, 5b (Fig. 4) auf der Testvorrichtung 3 zu stoppen, genauso wie es auch möglich ist, ein Testmodell 5 auf die Testvorrichtung 3 zu laden und dort zur Ausführung zu bringen. Die Aktivierung eines Testmodells 5, 5a, 5b kann in den dargestellten Ausführungsbeispielen unabhängig von dem Ladevorgang eines Testmodells 5, 5a, 5b angestoßen werden, beispielsweise, wenn zwar alle Testmodelle 5, 5a, 5b schon zu Beginn des Tests des Steuerungssystems 1 auf der Testvorrichtung 3 vorhanden waren, aber nicht gleichzeitig, sondern zeitversetzt zur Ausführung gebracht werden sollen.

Bei den in den Fig. 1 bis 6 dargestellten Ausrührungsbeispielen wird jedes Testmodell 5, 5a, 5b zu Beginn seiner Laufzeit in einem zum Umgebungsmodell 4 asynchronen Betriebsmodus ausgeführt, bis all jene Initialisierungsvorgänge der Testmodelle 5, 5a, 5b abgeschlossen sind, die eine Ausführung des Testbetriebs in Echtzeit verhindern würden. Durch diese Ausgestaltung des Testverfahrens können die Echtzeit- und Synchronitätsanforderungen zeitweilig zurückgestellt werden, so daß keine Gefahr besteht, daß der Testvorgang aufgrund der Verletzung dieser Anforderungen abgebrochen wird, obwohl die fertig initialisierten Testmodelle 5, 5a, 5b ohne weiteres unter Erfüllung dieser Anforderungen auf der Testvorrichtung 3 ausgeführt werden können.

Die in den Fig. 1 bis 6 dargestellte Testvorrichtung bzw. das dargestellte Testverfahren ist so ausgestaltet, daß jedes Testmodell 5, 5a, 5b auf der Testvorrichtung 3 in einem solchen Ausführungsformat vorliegt bzw. in ein solches Ausführungsformat übersetzt wird, das durch einen auf der Testvorrichtung 3 implementierten Interpreter ausgeführt wird, In den Ausführungsbeispielen handelt es sich dabei um einen Echtzeit-Interpreter, der die in Form von Byte-Code vorliegenden Testmodelle 5, 5a, 5b übersetzt und zur Ausführung bringt.

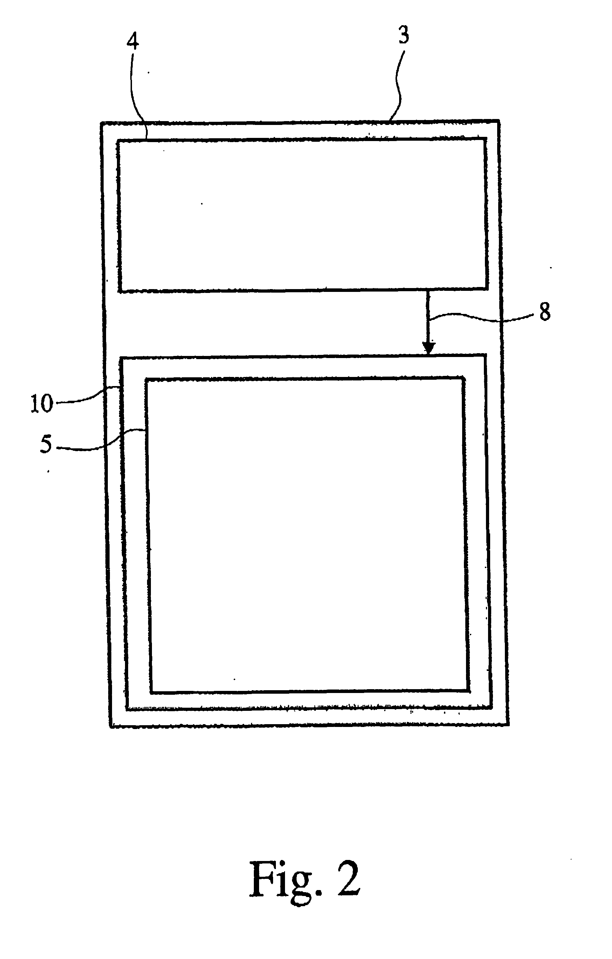

Bei den dargestellten Ausführungsbeispielen wird zur Synchronisierung des Testmodells 5, 5a, 5b mit dem Umgebungsmodell 4 von dem Umgebungsmodell 4 ein Aktivierungssignal 8 zur Aktivierung des Testmodells 5, 5a, 5b generiert. Das Aktivierungssignal 8 erfüllt die Funktion eines Taktgebers für die Ausführung der Testmodelle 5, 5a, 5b, wobei die geforderte funktionale Unabhängigkeit zwischen dem Umgebungsmodell 4 und den Testmodellen 5, 5a, 5b weiterhin gewahrt ist. Die Generierung des Aktivierungssignals 8 ist insbesondere in den Fig. 2 bis 4 und 6 dargestellt. In den Ausführungsbeispielen wird das Aktivierungssignal 8 in jedem Berechnungsiniervall 9 des Umgebungsmodells 4 generiert, so daß das Testmodell 5, 5a, 5b taktgenau synchron mit dem Umgebungsmodell 4 ausgeführt werden kann.

In den Ausfübrungsbeispielen wird das Aktivierungssignal 8 jeweils ausgegeben, nachdem alle Eingangsgrößen des Umgebungsmodells 4 eingelesen und alle Modellgrößen des Umgebungsmodells 4 - ggf. unter Nutzung dieser Eingangsgrößen - berechnet worden sind. Dadurch wird sichergestellt, daß die Beeinflussung des Umgebungsmodells 4 durch das Testmodell 5, 5a, 5b dann erfolgt, wenn das Umgebungsmodell einen konsistenten Datenbestand aufweist.

Wie in den Fig. 2 bis 4 und 6 dargestellt ist, wird durch das Aktivierungssignal 8 ein Scheduling-Verfahren aktiviert, das die Ausführungen des Testmodells 5 koordiniert, wodurch ebenfalls die funktionale Unabhängigkeit zwischen Umgebungsmodell 4 und Testmodell 5 gewahrt bleibt.

Das Scheduling-Verfahren ist in den Ausfiihmngsbeispielen gemäß den Fig. 1 bis 6 in bestimmter Weise ausgestaltet, um die Echtzeit- und Synchronitätsanforderungen in besonders vorteilhafter Weise erfüllen zu können. Dazu wird aufgrund des Aktivierungssignals 8 zunächst ein erster Scheduler 10 aktiviert, wobei der erste Scheduler 10 das Testmodell 5 zur Ausführung bringt (Fig. 2). Die Ausführung kann in den Ausführungsbeispielen auch nur auf den Teil des Testmodells 5, 5a, 5b gerichtet sein, der einem vorgegebenen Berechnungsintervall 9 entspricht. Nach abgeschlossener Ausführung des Testmodells 5, 5a, 5b bzw. des vorgegebenen Teils des Testmodells 5, 5a, 5b zeigt der erste Scheduler 10 die Beendigung der Berechnung durch ein - nicht dargestelltes - Beendigungssignal an. Daraus folgt, daß der erste Scheduler 10 die Ausführung des Testmodells 5, 5a, 5b von weiteren Parametern abhängig machen kann, wie zum Beispiel der Systemzeit oder dem aktuellen Berechnungsintervall 9. Diese Parameter werden dem ersten Scheduler 10 in den dargestellten Ausführungsbeispielen als Aufrufparameter übergeben.

In anderen - hier nicht dargestellten - Ausführungsbeispielen erhält der erste Scheduler 10 diese und andere Parameter durch Auslesen eines dafür vorgesehenen Parameter-Speicherbereichs. Diese Parameter können ganz allgemein auch Informationen darüber enthalten, welche der Testmodelle 5, 5a, 5b ausgeführt oder gestoppt werden sollen.

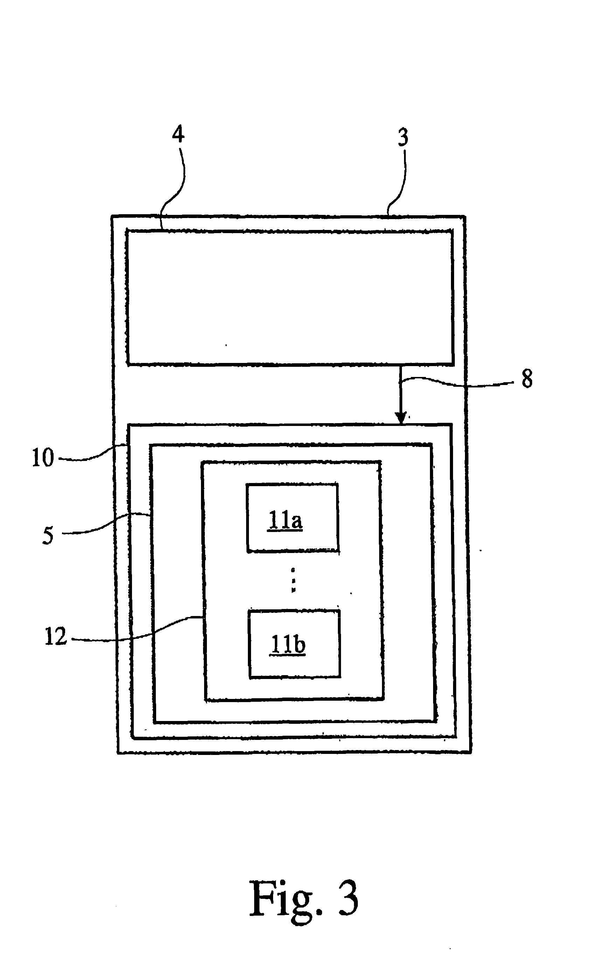

Ein Testmodell 5, 5a, 5b kann mehrere Teststränge 11a, 11b bzw. 11c, 11d umfassen, wobei unter Teststrängen 11a, 11b, 11c, 11d solche Teile eines Testmodells 5, 5a, 5b zu verstehen sind, die gleichzeitig - also innerhalb eines Berechnungsintervalls 9 - ausgeführt werden sollen. In dem Fall, daß das Testmodell 5, 5a, 5b mehrere gleichzeitig zu verarbeitende Teststränge 11a, 11b, 11c, 11d aufweist, ruft der erste Scheduler 10 einen zweiten Scheduler 12, 12a, 12b - ggf. unter Angabe der gleichzeitig zu verarbeitenden Teststränge - auf, woraufhin der zweite Scheduler 12, 12a, 12b die Ausführung der gleichzeitig zu bearbeitende Teststrängen 11a, 11b, 11c, 11d nacheinander veranlaßt und nach Beendigung aller gleichzeitig zu bearbeitenden Teststränge 11a, 11b, 11c, 11d die Beendigung der Ausführung dem ersten Scheduler 10 anzeigt. Der erste Scheduler 10 zeigt die Beendigung der Berechnung daraufhin durch ein Beendigungssignal an. Fig. 3 stellt dar, daß ein einziges Testmodell 5 mehrere Teststränge 11a, 11b umfaßt, die mit Hilfe des aufgezeigten Verfahrens systematisch bearbeitet werden.

In dem Fall, daß mehrere Testaxodelle 5, 5a, 5b bzw. Teile mehrerer Testmodelle 5, 5a, 5b gleichzeitig zu berechnen sind, ist in dem Ausführungsbeispiel gemäß Fig. 4 vorgesehen, daß der erste Scheduler 10 jedem Testmodell 5, 5a, 5b einen zweiten Scheduler 12a, 12b zuordnet und den einen jedem Testmodell 5, 5a, 5b zugeordneten zweiten Scheduler 12a, 12b aufruft, derart, daß immer nur ein zweiter Scheduler 12a, 12b aktiv ist, der jeweils aktive zweite Scheduler 12a, 12b dem ersten Scheduler 10 die Beendigung der Ausführung des ihm zugeordneten Testmodells 5, 5a, 5b anzeigt, woraufhin der erste Scheduler 10 einen weiteren - bislang unaktivierten - zweiten Scheduler 12a, 12b aktiviert, bis alle Testmodelle 5, 5a, 5b bzw. Teile von Testmodellen 5, 5a, 5b berechnet worden sind, woraufhin der erste Scheduler 10 die Beendigung der Berechnung durch ein Beendigungssignal anzeigt. Dieses Verfahren ist besonders übersichtlich und einfach zu implementieren und ermöglicht es auf einfache Weise, die vollständige Bearbeitung mehrerer Testmodelle 5, 5a, 5b zu überprüfen.

Das Ausführungsbeispiel gemäß Fig. 4 zeigt ferner, daß die beschriebenen Eigenschaften des Scheduling-Verfahrens auch kombiniert eingesetzt werden können, also beispielsweise in dem Fall, daß mehrere der Testmodelle 5, 5a, 5b parallele Teststränge 11a, 11b, 11c, 11d aufweisen.

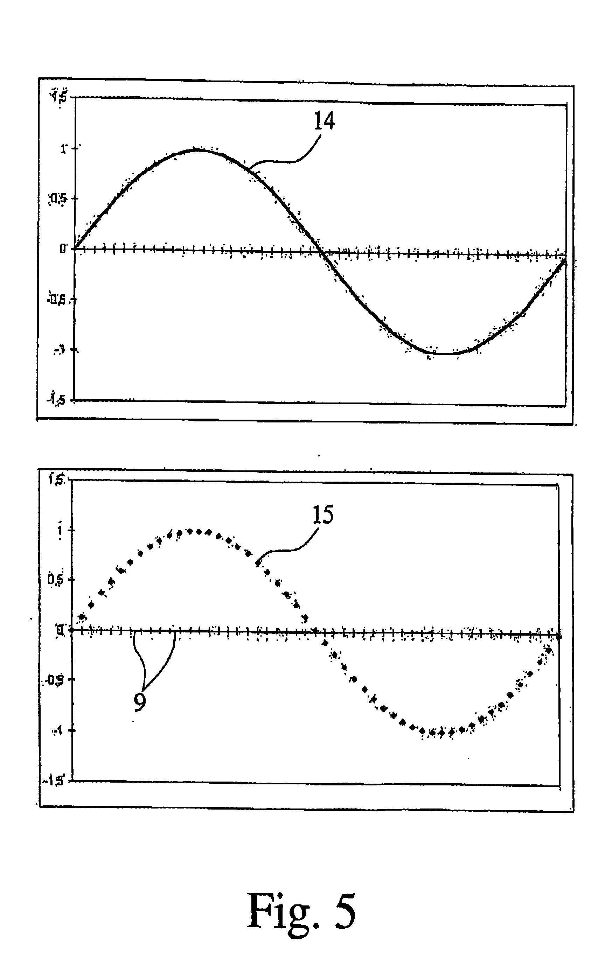

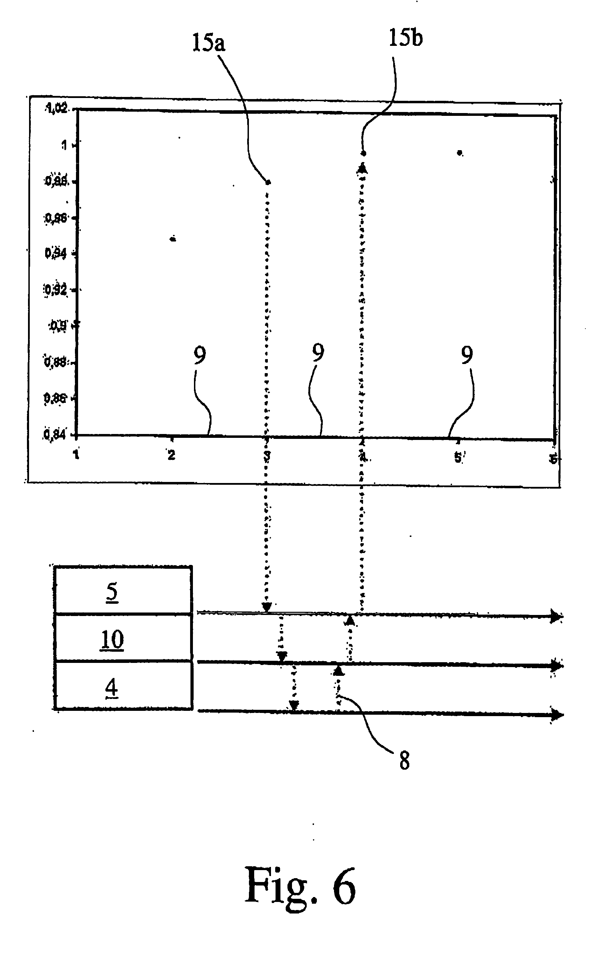

Das in den Fig. 5 und 6 dargestellte Ausftihrungsbeispiel erläutert die Funktionsweise des Testverfahren, des Scheduling-Verfahrens und der Testvorrichtung anhand eines praktischen Beispiels, bei dem durch die Testvorrichtung 3 ein sinusförmiges Signal als Testsignal ausgegeben werden soll, Fig. 5 zeigt ein kontinuierliches sinusförmiges Signal 14 als auch ein von der Testvorrichtung 3 bzw. dem Testmodell 5 unter Berücksichtigung der Berechnungsintervalle 9 des Umgebungsmodells 4 zu generierendes zeitdiskretes Signal 15, das dem zeitlich dislaetisierten kontinuierlichen Signal 14 entspricht.

Staripunkt der Betrachtung ist in Fig. 6 die erfolgreiche Berechnung des diskreten Signalwertes 15a zu Beginn des mit Zeiteinheit "3" bezeichneten Berechnungsintervalls; zur Vereinfachung wird angenommen, daß die Testmodelle immer zu Anfang eines jeden Berechnungsintervalls 9 ausgeführt werden. Die Berechnung erfolgte durch Ausführung des Testmodells 5 nahe dem Zeitpunkt "3". Nach vollzogener Berechnung des Signalwertes 15a verweist der erste Scheduler 10 durch Ausgabe eines Beendigungssignals wieder auf das Umgebungsmodell 4 zurück (gestrichelte, vertikal nach unten weisende Pfeile in Fig. 6).

Bei Erreichen des nächsten Berechnungsintervalls 9 zum Zeitpunkt von "4" Zeiteinheiten generiert das Umgebungsmodell 4 durch das Aktivierungssignal 8 wiederum den ersten Scheduler 10, der daraufhin die Berechnung des Testmodells 5 für das nunmehr aktuelle Berechnungsintervall 9 anstößt, was in der Berechnung des Signalwertes 15b endet (gestrichelte, vertikal nach oben weisende Pfeile in Fig. 6). Der beschrieben Vorgang wird für die nächsten Berechnungsintervalle 9 sinngemäß fortgesetzt.

## Patentansprüche

1. Scheduling-Verfahren zur Ausführung wenigstens eines Testmodells (5) auf einer Testvorrichtung (3), wobei aufgrund eines externen Aktivierungssignals (8) ein erster Scheduler (10) aktiviert wird, wobei der erste Scheduler (10) das Testmodell (5) zur Ausrührung bringt bzw. den Teil des Testmodells (5) zur Ausführung bringt, der einem vorgegebenen Berechnungsintervall (9) entspricht und der erste Scheduler (10) nach abgeschlossener Ausführung des Testmodells (5) bzw. des vorgegeben Teils des Testmodells (5) die Beendigung der Berechnung durch ein Beendigungssignal anzeigt,
**dadurch gekennzeichnet,**
**daß** der erste Scheduler (10) in dem Fall, daß das Testmodell (5) mehrere gleichzeitig zu verarbeitende Teststränge (11a, 11b; 11c, 11d) aufweist, einen zweiten Scheduler (12) unter Angabe der gleichzeitig zu verarbeitenden Teststränge (11a, 11b; 11c, 11d) aufruft, woraufhin der zweite Scheduler (12) die Ausführung der gleichzeitig zu bearbeitenden Teststränge (11a, 11b; 11c, 11d) nacheinander veranlaßt und nach Beendigung aller gleichzeitig zu bearbeitenden Teststränge (11a, 11b; 11c, 11d) die Beendigung der Ausführung dem ersten Scheduler (10) anzeigt, woraufhin der erste Scheduler (10) die Beendigung der Berechnung durch ein Beendigungssignal anzeigt.

2. S cheduling-Verfahren nach Anspruch 1, **dadurch gekennzeichnet, daß** der erste Scheduler (10) in dem Fall, daß mehrere Testmodelle (5a, 5b) bzw. Teile mehrerer Testmodelle (5a, 5b) gleichzeitig zu berechnen sind, den einem jeden Testmodell (5a, 5b) zugeordneten zweiten Scheduler (12a, 12b) aufruft, derart, daß immer nur ein zweiter Scheduler (12a, 12b) aktiv ist, der jeweils aktive zweite Scheduler (12a, 12b) dem ersten Scheduler (10) die Beendigung der Ausführung des ihm zugeordneten Testmodells (5a, 5b) anzeigt, woraufhin der erste Scheduler (10) einen weiteren - bislang unaktivierten - zweiten Scheduler (12a, 12b) aktiviert, bis alle Testmodelle (5a, 5b) bzw. Teile von Testmodellen (5a, 5b) berechnet worden sind, woraufhin der erste Scheduler (10) die Beendigung der Berechnung durch ein Beendigungssignal anzeigt.

## Claims

1. Scheduling method for executing at least one test model (5) in a test apparatus (3), a first scheduler (10) being activated on the basis of an external activation signal (8), the first scheduler (10) executing the test model (5) or that part of the test model (5) which corresponds to a predefined calculation interval (9), and the first scheduler (10) indicating the completion of the calculation by means of a completion signal after execution of the test model (5) or the predefined part of the test model (5) has been concluded,
**characterized in that**,
in the event of the test model (5) having a plurality of test strands (11a, 11b; 11c, 11d) to be processed at the same time, the first scheduler (10) calls up a second scheduler (12) and indicates the test strands (11a, 11b; 11c, 11d) to be processed at the same time, whereupon the second scheduler (12) causes the test strands (11a, 11b; 11c, 11d), which are to be processed at the same time, to be executed in succession and, after completion of all test strands (11a, 11b; 11c, 11d) to be processed at the same time, indicates the completion of execution to the first scheduler (10), whereupon the first scheduler (10) indicates the completion of the calculation by means of a completion signal.

2. Scheduling method according to Claim 1, **characterized in that**, in the event of a plurality of test models (5a, 5b) or parts of a plurality of test models (5a, 5b) needing to be calculated at the same time, the first scheduler (10) calls up the second scheduler (12a, 12b) associated with each test model (5a, 5b) in such a manner that only one second scheduler (12a, 12b) is ever active, the respectively active second scheduler (12a, 12b) indicates the completion of the execution of the test model (5a, 5b) associated with it to the first scheduler (10), whereupon the first scheduler (10) activates a further - previously unactivated - second scheduler (12a, 12b) until all test models (5a, 5b) or parts of test models (5a, 5b) have been calculated, whereupon the first scheduler (10) indicates the completion of the calculation by means of a completion signal.

## Revendications

1. Procédé de séquençage pour exécuter au moins un modèle de test (5) sur un dispositif de test (3), pour un premier module de séquençage (10) étant activé suite à un signal d'activation externe (8), le premier module de séquençage (10) amenant l'exécution du modèle de test (5) ou de la partie du modèle de test (5) qui correspond à un intervalle de calcul (9) prédéterminé et lorsque l'exécution du modèle de test (5) ou de la partie prédéterminée du modèle de test (5) est terminée, le premier module de séquençage (10) signalant la fin du calcul par un signal de fin,
**caractérisé**
**en ce qu'**au cas où le modèle de test (5) présente plusieurs parcours de test (11a, 11b; 11c, 11d) qui doivent être traités simultanément, le premier module de séquençage (10) appelle un deuxième module de séquençage (12) en indiquant les parcours de test (11a, 11b; 11c, 11d) qui doivent être traités simultanément, suite à quoi le deuxième module de séquençage (12) lance l'exécution successive des parcours de test (11a, 11b; 11c, 11d) qui doivent être traités simultanément et en ce que lorsque tous les parcours de test (11a, 11b; 11c, 11d) qui doivent être traités simultanément sont terminés, il signale la fin de l'exécution au premier module de séquençage (10), suite à quoi le premier module de séquençage (10) signale la fin du calcul par un signal de fin.

2. Procédé de séquençage selon la revendication 1, **caractérisé en ce qu'**au cas où plusieurs modèles de test (5a, 5b) ou parties de plusieurs modèles de test (5a, 5b) doivent être calculés simultanément, le premier module de séquençage (10) appelle le deuxième module de séquençage (12a, 12b) associé à chaque modèle de test (5a, 5b), **en ce que** seul un deuxième module de séquençage (12a, 12b) est actif à la fois, **en ce que** le deuxième module de séquençage (12a, 12b) actif signale au premier module de séquençage (10) la fin de l'exécution du modèle de test (5a, 5b) qui lui est associé, suite à quoi le premier module de séquençage (10) active un autre deuxième module de séquençage (12a, 12b) encore non activé, jusqu'à ce que tous les modèles de test (5a, 5b) ou parties de modèles de test (5a, 5b) aient été calculés, suite à quoi le premier module de séquençage (10) signale la fin du calcul par un signal de fin.
